# EUROPEAN PATENT SPECIFICATION

(11) **EP 2 225 915 B1**
(45) Date of publication and mention of the grant of the patent: **05.03.2014**
(21) Application number: 08864932.2
(22) Date of filing: 14.11.2008
(51) Int. Cl.: H05B 33/08

(54) **CONTACTLESS POWER AND DATA TRANSFER SYSTEM AND METHOD**
SYSTEM UND VERFAHREN FÜR KONTAKTFREIE LEISTUNGS- UND DATENÜBERTRAGUNG
SYSTÈME ET PROCÉDÉ DE TRANSFERT DE DONNÉES ET DE PUISSANCE SANS CONTACT

(30) Priority: 20.12.2007 US 960909
(43) Date of publication of application: 08.09.2010
(73) Proprietor: General Electric Company, Schenectady, NY 12345 (US)
(72) Inventor: YAKIMOV, Aharon, Niskayuna, NY 12309 (US); ERLAT, Ahmet, Gun, Clifton Park, NY 12065 (US); LITZ, Kyle, Erik, Ballston Spa, NY 12020 (US); GLASER, John, Stanley, Niskayuna, NY 12309 (US); HELLER, Christian Marie, Anton, Albany, NY 12203 (US)
(74) Representative: Bedford, Grant Richard
(86) International application number: PCT/US2008/083506
(87) International publication number: WO 2009/082566

(56) References cited:
- WO-A-02/31406
- WO-A-2008/012702
- US-A1- 2002 008 973
- US-A1- 2006 087 224

## Description

The invention relates generally to electrical powering of optoelectronic semiconductor devices. The invention more particularly relates to the contactless transfer of electrical power or information to or from encapsulated optoelectronic semiconductor devices.

Optoelectronic semiconductor devices, especially devices based on organic materials are known to degrade rapidly when exposed to moisture and oxygen. Moisture and oxygen are often viewed as major extrinsic degradation factors, limiting the device lifetime. Typical large area devices such as organic light emitting devices (OLEDs) are fabricated, either in batch or roll-to-roll, using a hermetic packaging scheme so that the OLED is protected from harmful ambient. Typically, glass, metal foil (both inherently excellent barriers) and plastic films with a thin film barrier are used as substrate and/or superstrate depending on the device structure. A thin film barrier can also be applied as top encapsulation for an optoelectronic semiconductor device built on any of these aforementioned materials used as substrates. However, there are still parts or areas of the device where encapsulation is not applied or disrupted, such as portions of contact pads and power leads connecting the encapsulated device interior with the outside power sources. Unencapsulated power leads can prematurely corrode, delaminate or otherwise degrade providing a fast pathway for water vapor and oxygen ingress, compromising encapsulation.

A common method to test the barrier properties is to monitor the encapsulated device performance while it is exposed to a harsh environment such as 60°C/90%Relative Humidity (RH.). It is often observed with OLEDs, where part of the metal cathode contact reaches outside of the encapsulation, this contact delaminates, cracks and/or corrodes very rapidly (within hours) forming fast permeation pathway for water and oxygen thus causes premature device failure. Also, photovoltaic devices such as CIGS (copper indium gallium selenide) based devices on molybdenum substrate are also known to deteriorate due to water vapor and oxygen penetration.

Therefore, it is highly desirable to find a method to power such devices where aforementioned premature failure mechanisms are eliminated. Additional advantage of contactless power/data transfer is in potential cost savings achieved by elimination of multiple conductive interconnects, as, for example, required by such devices as displays and detector arrays.

Various aspects and embodiments of the present invention are thus defined by the appended claims.

These and other features, aspects, and advantages of the present invention will become better understood when the following detailed description is read with reference to the accompanying drawings in which like characters represent like parts throughout the drawings, wherein:
FIG. 1 is a schematic top and side view of an inductive contactless power transfer system in accordance with one embodiment of the invention.
FIG. 2 is a schematic representation of an inductive contactless power transfer system circuit suitable for one embodiment of the invention.
FIG. 3 is a schematic representation of an inductive contactless power transfer system circuit suitable for one embodiment of the invention.
FIG. 4 is a schematic representation of a cross-sectional view of power transfer components at a barrier encapsulation in accordance with one embodiment of the invention.
FIG. 5 is a schematic representation of a capacitive contactless power transfer system circuit suitable for one embodiment of the invention.
FIG. 6 is a schematic representation of a capacitive contactless power transfer system circuit suitable for one embodiment of the invention.
FIG. 7 is a schematic representation of a cross-sectional view of power transfer components at an encapsulating barrier in accordance with one embodiment of the invention.
FIG. 8 is a schematic representation of a rectifier circuit used in a contactless power transfer system accordance with one embodiment of the invention.
FIG. 9 is a schematic representation of a rectifier circuit used in a contactless power transfer system accordance with one embodiment of the invention.
FIG. 10 is a schematic representation of a contactless data transfer system circuit in accordance with one embodiment of the invention.
FIG. 11 is a schematic representation of a contactless power transfer system, wherein power is transferred out of a barrier encapsulated device, in accordance with one embodiment of the invention.

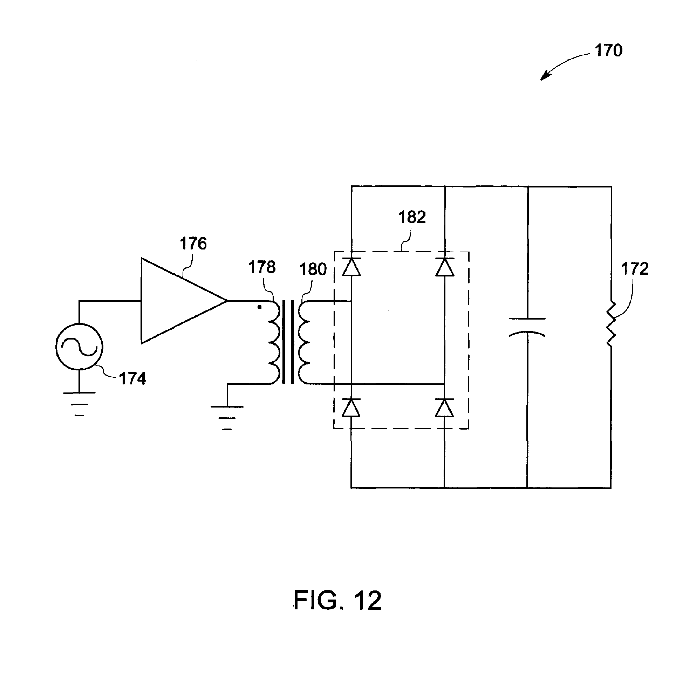

FIG. 12 is a schematic representation of an encapsulated OLED device in accordance with one embodiment of the invention.
FIG. 13 is a schematic representation of a contactless power transfer system circuit in accordance with one embodiment of the present invention.

Embodiments of the present invention disclose systems for contactless power transfer. In one embodiment, electrical power is transferred through an insulating barrier with time varying fields, either magnetic or electric, i.e. via inductive or capacitive coupling.

In the following specification and the claims that follow, the singular forms "a", "an" and "the" include plural referents unless the context clearly dictates otherwise. As used herein, the term "device" refers to an optoelectronic semiconductor device and/or to a plurality of optoelectronic semiconductor devices, the functionality of the device being based on the quantum mechanical effects of light in semiconducting materials. Non- limiting examples of such devices include light emitting diodes and photo diodes.

In one embodiment of the present invention, is a system including an encapsulated device and a contactless power transfer system. At least part of the device is enclosed within a barrier encapsulation. Non-limiting examples of devices, which may be advantageously encapsulated, are organic light emitting devices, organic photovoltaic devices, thin-film inorganic photovoltaic devices, detector arrays and displays. The contactless power transfer system is configured to couple power and/or data into or out of the encapsulated device, across the barrier encapsulation. In some embodiments, the device is wholly encapsulated.

A first part of the contactless power transfer system may be disposed internal to the encapsulation and a second part of the contactless power transfer system may be disposed external to the encapsulation, with the first part not in wired contact with the second part, and the first part and second part configured to transfer energy and/or data across the barrier encapsulation. In one embodiment, the distance between the first part and the second part is in the order of centimeters or less.

In some embodiments, the contactless power transfer system is an inductive power transfer system including at least one pair of transformer coils disposed across the barrier encapsulation. In one example, the barrier encapsulation is substantially transparent to magnetic field. In one embodiment, substantially transparent refers to at least 10% transparency to the magnetic field. In a further embodiment, substantially transparent refers to at least 50% transparency to the magnetic field.

In an alternate embodiment, the contactless power transfer system is a capacitive power transfer system. The capacitive power transfer system includes at least one pair of power transfer capacitors. The plates (first plate and second plate) of each capacitor is disposed on either side of the barrier encapsulation, with the barrier encapsulation positioned to act as a dielectric spacer between the first plate and the second plate of each capacitor of the at least one pair of capacitors.

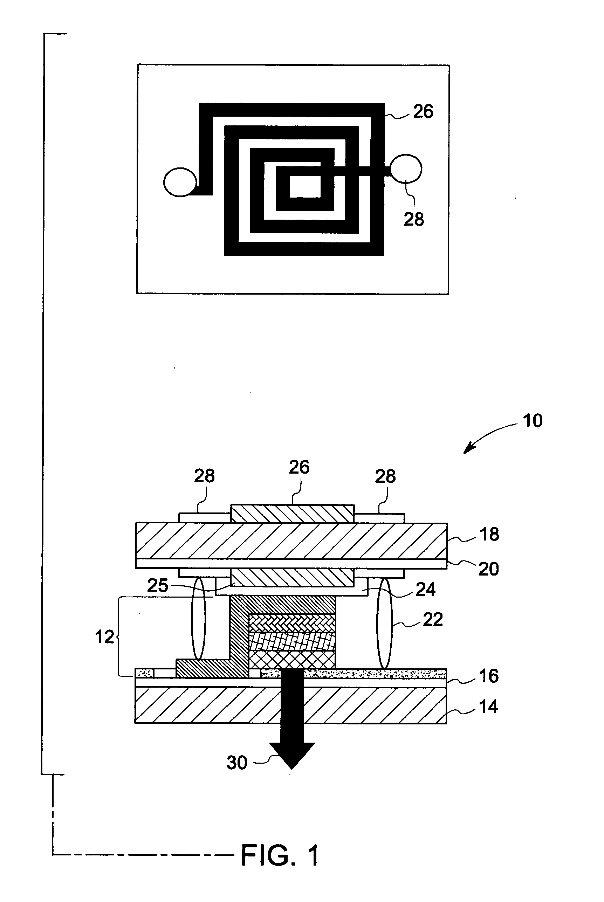

FIG.1 illustrates a contactless power transfer system 10 including an organic light emitting device 12 in one embodiment of the invention. The system 10 includes a front substrate 14 with a barrier coating 16 and a back substrate 18 with a barrier coating 20. In one embodiment, the barrier coatings 16 and 20 along with the respective substrates may form part of the barrier encapsulation, encapsulating the device. The system further includes an isolation element 24 and vertical interconnects 22. In contrast to conventional systems, instead of power leads from a power source directly being connected to the device 12 to power the device, the system of FIG.1 includes two inductive coils, primary coil 26 and secondary coil 25 disposed internal and external respectively to the encapsulation to transfer power from the source to the device in a contactless manner. The power is magnetically coupled across the barrier encapsulation between the inductive coils 25 and 26. A voltage when applied across coil 26 will induce across the encapsulation a voltage in coil 25, which can then be applied to power the light-emitting device 12. In one embodiment, the device is a large area thin film device, such as but not limited to an area illumination organic light-emitting device. In certain embodiment, the organic light emitting device may be fabricated using thin film techniques, which deposit in very thin, consecutive layers of atoms, molecules, or ions.

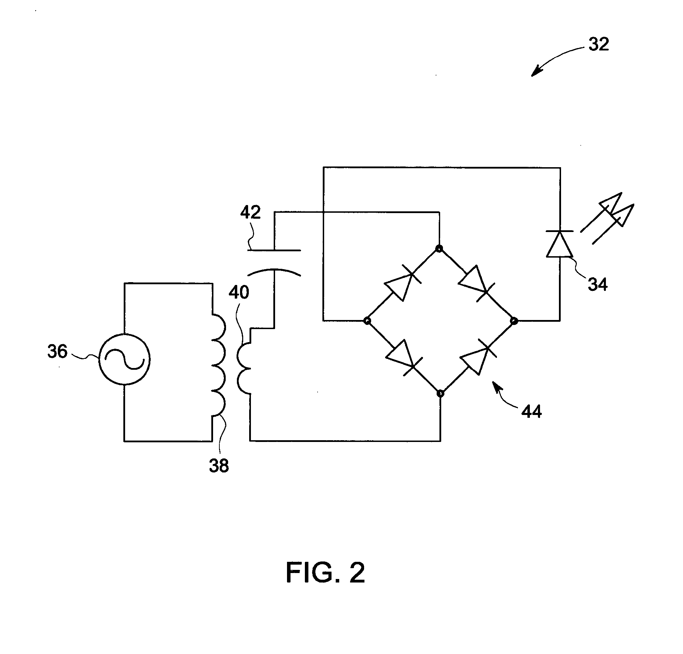

FIG. 2 illustrates a power transfer circuit 32 to power a light emitting optoelectronic semiconductor device 34 in one embodiment of the invention. An AC source 36 is used to provide electrical power to the primary coil 38, which transforms it into electromagnetic radiation, which in turn is transformed back to electrical signal by the secondary coil 40. A capacitor 42 and a bridge rectifier circuit 44 are used to convert the AC power to DC power to power the light emitting optoelectronic semiconductor devices.

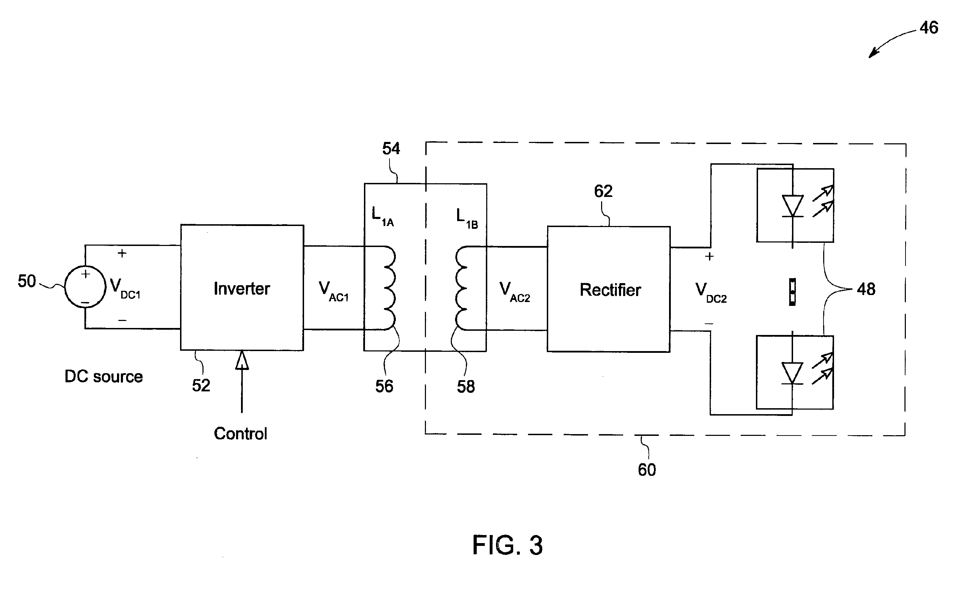

In the illustrated embodiment of FIG. 3, a contactless powered light emitting system 46, integrating an inductive power transfer circuit such as the one illustrated in FIG. 2, is shown. The system 46 includes a light emitting device assembly 48 disposed within an encapsulation 60 and powered by a DC source 50 present external to the encapsulation 60. In one embodiment, the light emitting device assembly is an organic light emitting device assembly. In a non-limiting example, the DC source may be a rectifier powered by an AC utility power for AC line-powered applications. In the illustrated embodiment, the DC power is first delivered to an inverter 52, which converts the DC power to AC power. The AC voltage V_{AC1} out of the inverter is then applied to the contactless link 54. The contactless link includes a transformer including coils L_{1A} 56 and L_{1B} 58, where coil 56 is disposed externally to the encapsulation 60 and coil 58 is internal to the encapsulation. The voltage V_{AC1} is applied to the coil L_{1A} 56 and the power is inductively transferred to L_{1B} 58 such that a voltage V_{AC2} is developed across L_{1B}. In one embodiment, the encapsulation 60 also acts as an insulating barrier separating the two coils, but the encapsulation is substantially transparent to magnetic field so that power may be transferred through the encapsulation. The AC power out of the coil 58 is then rectified using a rectifier 62 to supply the DC power required for light emitting optoelectronic semiconductor devices. The inverter and rectifier may be selected from any one of a large variety of well-known circuits. In a further embodiment, a rectifier may include a filtering element to smooth the current flow to the light emitting devices. Advantageously, the use of a high frequency inverter can help eliminate visible flicker due to ripple current in the rectifier output.

In some embodiments, the inverter or the DC source may be controlled to control the current through the light emitting optoelectronic semiconductor devices, and thus their light output. Furthermore, commonly used resonant inverter circuits may be configured to function as current sources, so that large changes in the light emitting device voltage result in minimal changes in device current. The devices themselves may be used as rectifiers or as part of a rectifier circuit.

The inductor coils in power transfer system may have the same number of turns or different number of turns. When the coils have different turns, the transformer may be used in a step-up voltage configuration or a step-down voltage configuration. In one embodiment, the transformer may be a variable transformer having an adjustable turn ratio, where at least one of the coils has an adjustable turn control. Therefore, the energy transfer across the barrier encapsulation can also be varied.

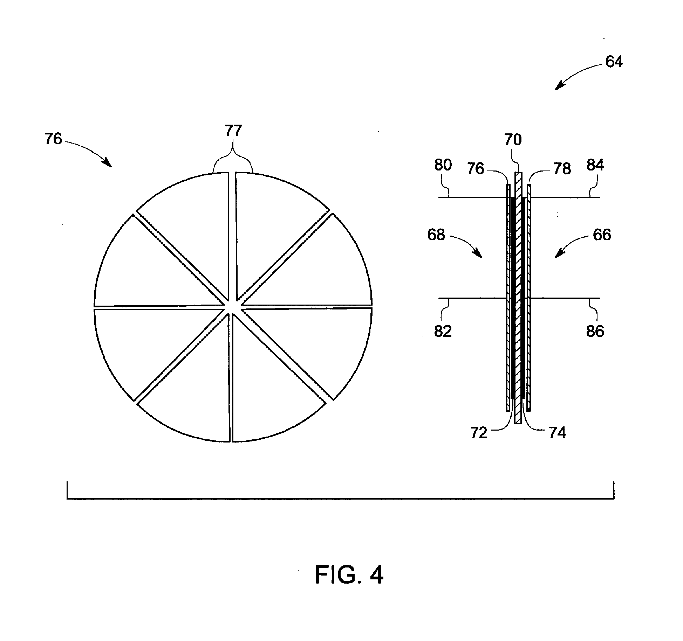

FIG 4 illustrates a cross-section of magnetically coupled power transfer components 64 at a barrier encapsulation 70, in one embodiment of the invention. In the illustrated embodiment, a first coil 72 is disposed exterior 68 to the encapsulation, while a second coil 74 is disposed interior 66 to the encapsulation. Magnetic core layers 76 and 78 are disposed adjacent to the coils 72 and 74 respectively. Conductors 80 and 82 brings the power from a power source to the coil 72 and the conductor 84 and 86 conducts power away from the coil 74 towards the device.

In one embodiment, one or more magnetic core layers may be disposed adjacent to the primary and/or secondary inductor coil. In the illustrated embodiment of FIG.4, the power transfer components include magnetic layers, i.e., magnetic cores 76 and 78. These layers may be made of a material of permeability substantially greater than one. Examples of such materials include, but are not limited to iron, cobalt, nickel and their alloys. It is expected that the magnetic core layers would help enhance the coupling coefficient of the transformer, enabling a more efficient operation at a given frequency than without the cores. In some embodiments, a magnetic core on one side of an inductor coil may be used to increase the coupling coefficient. In other embodiments, core layers may be present on both sides of an inductor coil and is expected to result in increase in efficiency by at least an order of magnitude. In certain embodiments, the magnetic cores are on the outside of the coil layers, and not between. The magnetic cores advantageously also reduce the stray magnetic field surrounding the coils, and thus reduce the generation of and the susceptibility to electromagnetic interference (EMI).

In one embodiment, the magnetic core layer 76 is a divided layer. Since many magnetic materials are also electrically conductive, eddy current losses may occur in the core layers. The losses may be reduced by dividing the magnetic core layer into sections as seen in the illustrated embodiment of FIG. 4. Such a radially divided core, in one example, is used with a round planar winding, e.g., a round spiral winding that is concentric with the core layer. The radial gaps in the core are expected to reduce the eddy currents with minimal effect on the magnetic coupling. The same principle applies with other shapes of coils.

For example, say power is transferred through a planar transformer without magnetic core at a level of 24W/cm² at a frequency of 6MHz with a coupling efficiency >90%. A frequency of 600kHz then would allow approximately 0.24W/cm² with comparable efficiency. The addition of a magnetic core on one side of the magnetic coupling can allow a further reduction of 15-30% in frequency for comparable efficiency if the core losses are kept low. The addition of core layers on both sides is expected to provide a 5X-10X improvement in the efficiency compared to when operated without a magnetic core.

As the operating frequency is increased, it is expected that the efficiency of energy transfer will also be increased. In one embodiment, a high frequency generator is powered by the primary source and the high frequency output from the high frequency generator is used to power the primary inductor coil.

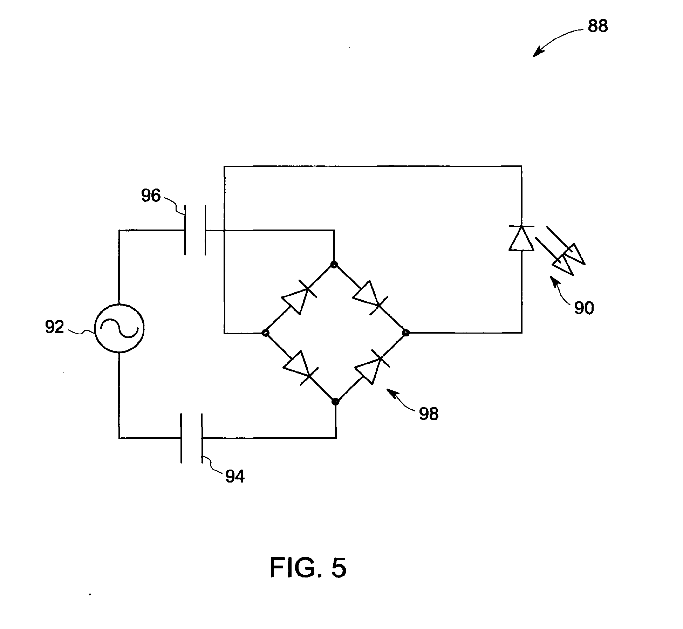

In alternate embodiments to the embodiments illustrated in FIG.4, capacitive coupling may be used to power encapsulated devices. The coupling capacitors are made of two conductor layers (plates) each, one conductor layer is disposed internal to the barrier encapsulation, and the other one is outside the barrier. The barrier encapsulation serves as a dielectric between the two plates. A capacitive coupling circuit 88 is illustrated in FIG. 5 in one embodiment of the invention. A light-emitting device 90 is powered by an AC power source 92 in a contactless manner. The power source 92 is connected to the outside plates of coupling capacitors 94 and 96. The load (device 90 with or without rectification/conditioning circuit) is connected to the inside plates of the capacitors. A bridge rectifier circuit 98 may be used to convert the AC voltage output from the coupling capacitor 96 to DC voltage, which is then applied across the device 90.

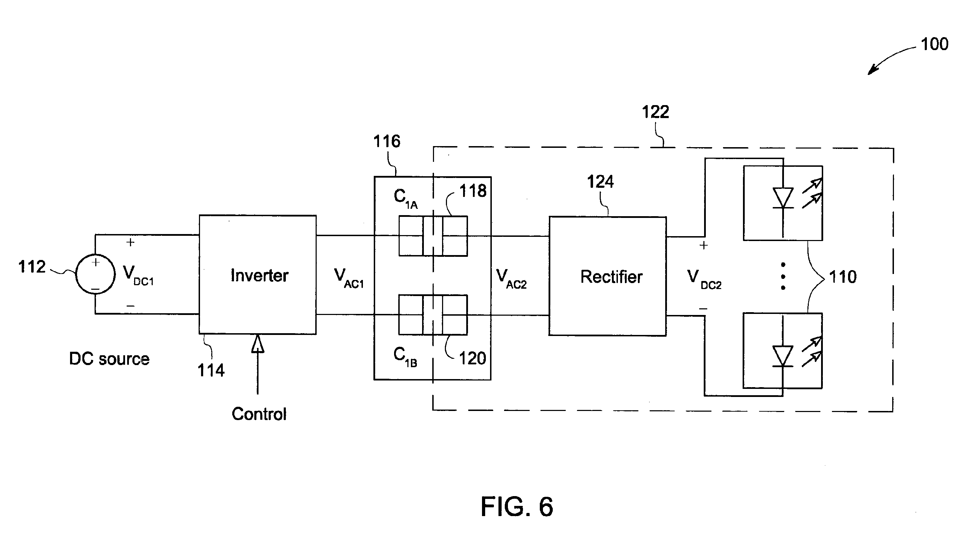

In the illustrated embodiment of FIG. 6, a contactless powered light emitting system 100, integrating a capacitive power transfer circuit such as the one illustrated in FIG.5, is shown. The system 100 includes a light emitting device assembly 110 and a DC power source supplying a DC voltage V_{DC1} to an inverter 114. A contactless link 116 is used to transfer power from the inverter 114 to a rectifier 124. The contactless link includes a first capacitor C_{1A} 118 and a second capacitor C_{1B} 120. The AC voltage output V_{AC1} of the inverter is applied to the capacitor plates of the capacitors 118 and 120, which are disposed external to the encapsulation 122. From the capacitor plates disposed interior to the encapsulation, the input AC voltage V_{AC2} to the rectifier 124 is supplied. The rectifier 124 converts the AC voltage V_{AC2} to DC voltage V_{DC2}, before being applied to the light emitting device assembly 110.

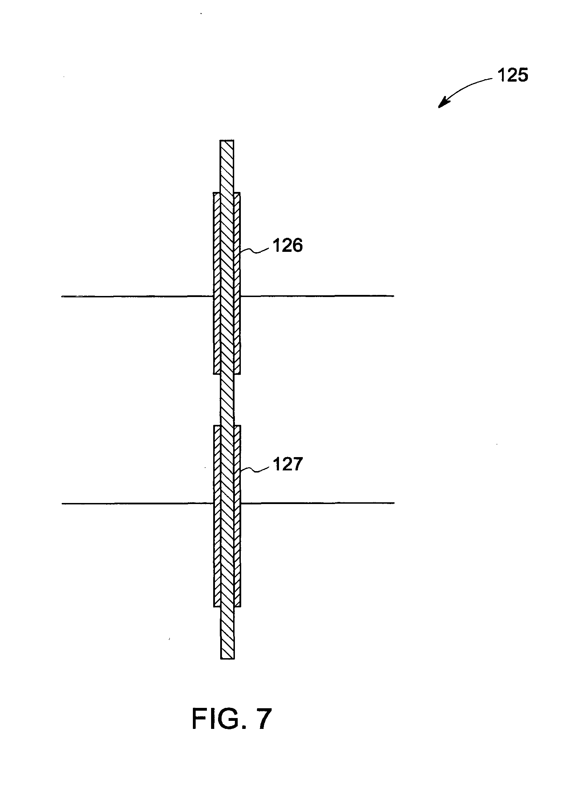

FIG. 7 shows a cross-section of capacitive coupling power transfer components 125 at the barrier encapsulation including capacitors 126 and 127. The conductor plates of each capacitor 126 and 127 are positioned on either side of the barrier encapsulation.

In a non-limiting example, for capacitive contactless power transfer, for a 50-micrometer thick polymer barrier encapsulation, a total series capacitance is expected to be in the order of 7.5pF-10pF (series combination of C_{1A} and C_{1B}) per cm². A 100kHz frequency would allow approximately 50mA of current with about 200VRMS across the barrier. In capacitive power transfer, it is advantageous to reduce the current required for a given power by using an increased number of smaller devices in series. Capacitive energy transfer can be improved by reducing the insulating barrier thickness, increasing its dielectric constant, or by increasing the operating frequency.

As the operating frequency is increased, efficiency of energy transfer is increased. In capacitive power transfer, for a given current, the voltage across the barrier increases in inverse proportion to the frequency, so that at low frequencies, the voltage can break down the barrier. Therefore, in one embodiment of a capacitive contactless power transfer system, a frequency generator is used to power the capacitors. In a non-limiting example the applied frequencies are in a range from about 50 kHz to about 1 MHz.

For both inductive and capacitive embodiments of the power transfer system, a large area transfer element may be replaced with a plurality of smaller area elements. So a plurality of transformers may be used to transfer power across the encapsulation. Alternatively, a plurality of pairs of capacitors may be used to transfer power across the encapsulation. This may allow the reduction of peak stray field strength for a given total energy transfer, and thus reduce the generation of and the susceptibility to electromagnetic interference (EMI).

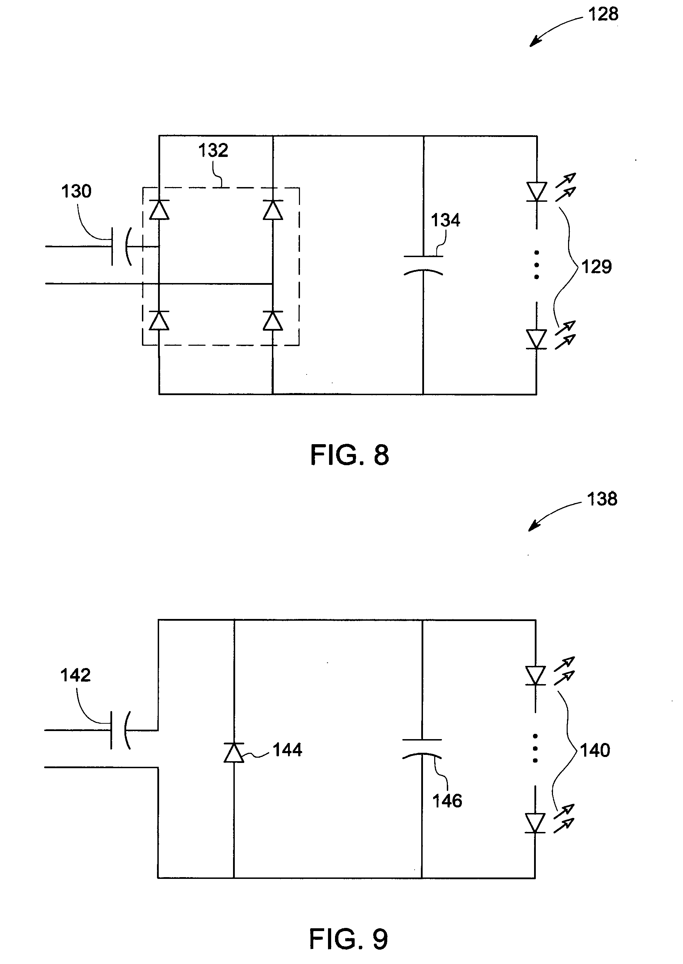

FIG. 8 is an illustrated example of a full-wave rectifier circuit 128 for use in a contactless power transfer system. The rectifier circuit 128 is used to power the devices 129 and includes an optional blocking capacitor 130, a bridge rectifier circuit 132 and a capacitive filter 134. In one embodiment, the capacitive filter 134 serves to reduce the AC component (ripple voltage or current) of the rectifier output.

FIG. 9 is an illustrated example of a half wave rectifier circuit 138. The optional blocking capacitor 142 is used in conjunction with the diode 144 and capacitive filter 146. In the absence of the blocking capacitor, the diode can still serve the purpose of minimizing the reverse voltage that appears on the light emitting optoelectronic semiconductor device assembly 140, by conducting when the light emitting optoelectronic semiconductor devices are reverse biased. This can occur if the diode 144 is chosen to have a forward drop less than a desired maximum reverse voltage on the light emitting device assembly.

Embodiments of encapsulated contactless powered systems include lighting devices such as organic light emitting devices and display devices. In one embodiment, the contactless powered systems are configured for continuous powering, for example for powering for several hours continuously. Other examples of encapsulated contactless power or data transfer devices include encapsulated detector arrays, data from which can be contactlessly transferred to outside the encapsulated detector array. Examples of such detector array include CCD devices. In one embodiment the device is an encapsulated optoelectronic planar semiconductor device. In a further embodiment, the planar semiconductor device may be a flexible device capable of being rolled into a shape.

In one embodiment, a barrier encapsulation material may include an organic material, an inorganic material or combinations thereof. The barrier encapsulations reduces exposure of the device to deleterious materials such as but not limited to water vapor and oxygen. Non-limiting examples of barrier encapsulation material include glass, polymer, metal and combinations thereof. In some examples, the barrier encapsulation may be in the form of a metal foil. In some embodiments, a multilayer encapsulation including one or more barrier materials may be used. In one embodiment, the barrier encapsulation acts as a barrier against oxygen and/or water vapor penetration into the device. Examples of organic-inorganic barrier coatings are described in many references including US Patent No. 6746782 and US Patent No. 7015640. For example, such barrier encapsulation may provide water vapor transmission rates below 0.1 g/m2/day and oxygen transmission rate below 1 g/m2/day.

In one embodiment, the contactless power transfer system is a contactless data transfer system. In a non-limiting example, data can be sent to a modulator so that it can be carried on a high frequency carrier across the insulating barrier, where the signal is demodulated and sent on to additional control circuitry. This control circuitry could be used to control one or more devices. In particular, this control could be used to control displays, e.g. computer monitors or video displays. Such an approach could be used to eliminate hundreds, thousands, or greater numbers of conductive interconnects currently used, with the possibility of greatly reducing cost and increasing reliability of such displays. This could be applied to any optoelectronic semiconductor device system, including for example light emitting displays and liquid crystal displays, where the individual devices (or pixels) may be required to be sealed against the atmosphere or other ambient conditions.

In one embodiment, the system transfers both power and data. Inductive or capacitive coupling can be used to transfer data in addition to power. For example, it is possible to use an inverter as a modulator, so that it can transfer both power and data. Furthermore, a modulated data signal may be generated, combined with the power transfer waveform, and sent across the same contactless link. Alternatively, data signal may be transferred through a separate contactless link.

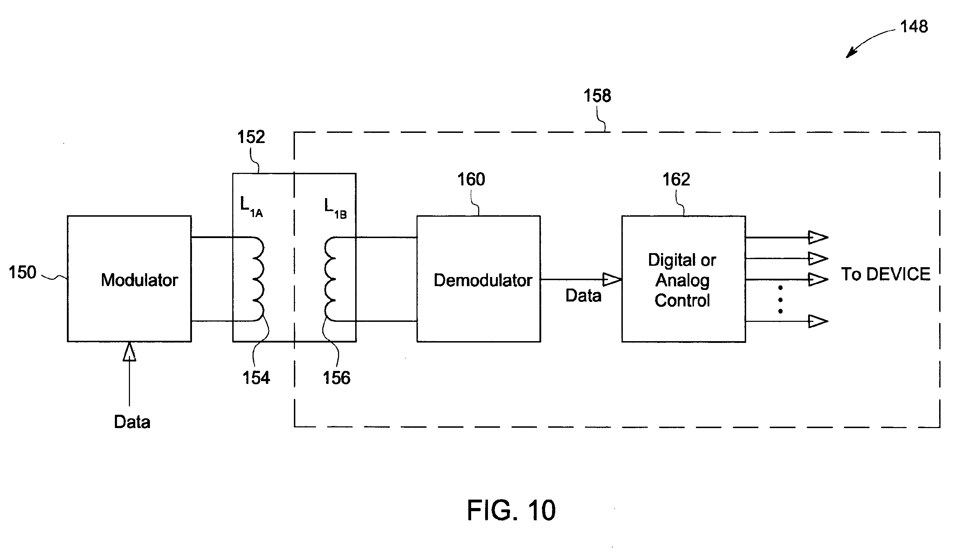

FIG. 10 illustrates a contactless data transfer system embodiment. The system 148 includes a modulator 150, which receives a data signal to be transferred. The modulator modulates a carrier frequency signal encoding the data in a modulated data signal, which is delivered to a contactless link 152. The contactless link 152 includes an inductor coil 154 disposed outside a barrier encapsulation 158 and an inductor coil 156 disposed inside the barrier encapsulation. The inductor coil 156 receives the modulated data signal, which is demodulated at the demodulator 160 to extract the data signal and the data signal is sent on to additional control circuitry 162, which may be configured to control a device.

Although all the above described embodiments of the invention teach contactless transfer of power into an encapsulated optoelectronic semiconductor device, the invention is not limited to systems where power is transferred into an encapsulated optoelectronic semiconductor device. Contactless power transfer systems where power is transferred out of an encapsulated optoelectronic semiconductor device, also falls within the scope of this invention. For example, the contactless power transfer system may include an encapsulated photovoltaic device from which energy is transferred out.

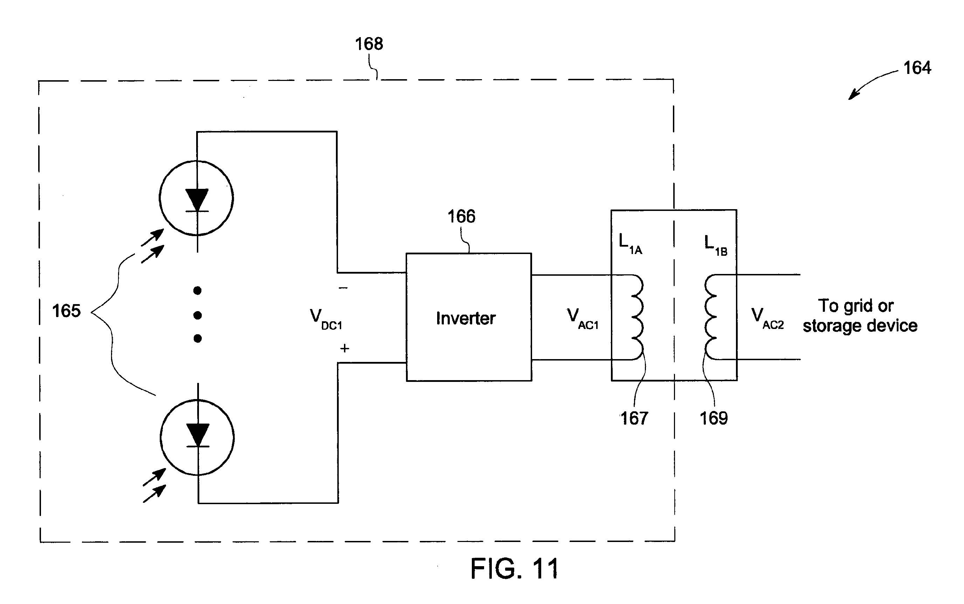

One such example is illustrated in FIG. 11. The contactless power transfer system 164 includes a photovoltaic assembly 165 including one or more photovoltaic devices. The DC output V_{DC1} from the DC assembly is converted from DC to AC by an inverter 166. The AC voltage V_{AC1} is delivered to an inductor coil L_{1A} 167 forming an interior power transfer component of the contactless link. The photovoltaic assembly 165, the inverter 166 and the coil L_{1A} 167 are all encapsulated within the barrier encapsulation 168. The energy is magnetically transferred to inductor coil L_{1B} 169 across the encapsulation. The AC voltage output of the coil V_{AC2} may be supplied to a grid or may be converted to DC and stored in a storage device. In one embodiment, the photovoltaic devices are organic photovoltaic devices.

### EXAMPLE 1

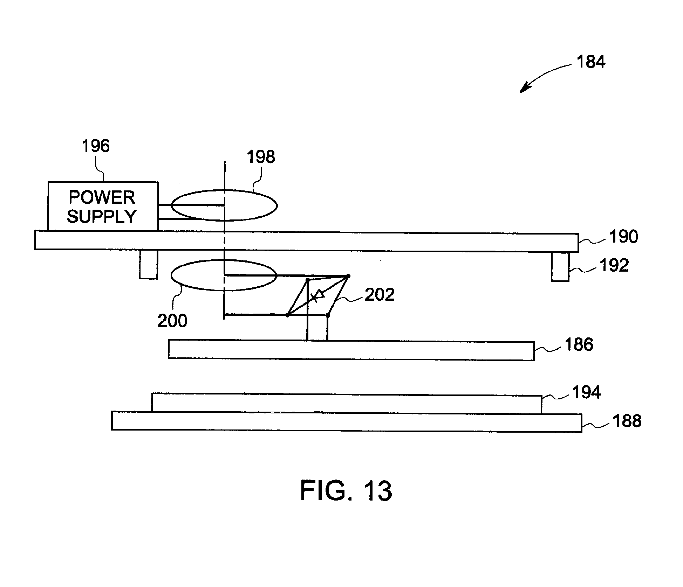

In a first example of contactless powering 170, a 500 ohm load 172 was powered in a contactless mode. A low frequency or line frequency AC source 174 was used to power a high frequency generator 176 as illustrated in FIG. 13. A spiral transformer with primary coil 178 and secondary coil 180 was used. A 1mil Mylar layer formed the barrier between the transformer coils. A capacitive filter 193 (C = 0.22uF) was used in combination with a full bridge rectifier 182 (4x MBR1100RLG) to rectify the output from the secondary coil and to provide DC input across the load 172. Both primary and secondary currents (primary and secondary coils) were measured with Lecroy AP105 current probes. Both primary and secondary voltages were measured with Lecroy PP007 probes to compare power on primary to power on secondary. The frequency output of the frequency generator was varied from 250 kHz to 1 MHz and the primary and secondary power outputs were determined. The measurements were performed with and without the ferrite core. The results without the Ferrite core layer are summarized in Table 1. The results with the ferrite core layer are summarized in Table 2.

**Table 1: Measured power outputs of primary and secondary coils.**

| Coil | Frequency | Vdc, V | Power, W | W/W % |
|---|---|---|---|---|
| Primary | 1 MHz | 35.37 | 2.94 | |
| Secondary | 1 MHz | 35.38 | 2.78 | 94.56 |
| Primary | 1 MHz | 50.0 | 6.2 | |
| Secondary | 1 MHz | 50.0 | 5.7 | 91.94 |
| Primary | 500 kHz | 35.36 | 3.5 | |
| Secondary | 500 kHz | 35.33 | 2.64 | 75.43 |
| Primary | 500 kHz | 50.0 | 6.8 | |
| Secondary | 500 kHz | 49.9 | 5.1 | 75.00 |
| Primary | 250 kHz | 35.35 | 5.1 | |
| Secondary | 250 kHz | 35.4 | 2.61 | 51.18 |
| Primary | 250 kHz | 50.0 | 10.6 | |
| Secondary | 250 kHz | 50.2 | 5.24 | 49.43 |

**Table 2: Measured power on spiral transformer primary and secondary with a 500 ohm load and ferrite core layer on the primary side.**

| Frequency | Vdc (on 500Ohm) | Power primary | Power secondary | W/W % |
|---|---|---|---|---|
| 250 kHz | 50 | 6.7 | 5.3 | 79.10 |
| 500 kHz | 50 | 5.79 | 5.31 | 91.71 |
| 1 MHz | 50 | 5.73 | 5.48 | 95.64 |

The results summarized in Tables 1 and 2 indicate that at higher frequencies the efficiency of contactless power transfer is greater.

### EXAMPLE 2

The contactless powering circuit of Example 1 was used to power an encapsulated OLED (organic light emitting device) device fabricated as illustrated in FIG. 13. The system included an OLED encapsulated by a bottom glass substrate 188 and a top glass substrate 190 separated by glass spacers 192. A diffuser 194 was disposed across the bottom substrate 188, through which light from the encapsulated OLED emerged. A power supply 196 was electrically connected to the outside of the top substrate and supplied power to the primary coil 198. Energy was transferred across the top substrate to the secondary coil 200. The AC output from the secondary coil was converted by a rectifier circuit 202 to a DC output that was used to energize the OLED 186.

## Claims

1. A system (10) comprising:
an encapsulated optoelectronic semiconductor device (12) disposed within a barrier encapsulation (60); and
a contactless power transfer system (32) configured to transfer at least one of power and data across the barrier encapsulation (60);
wherein the system (10) includes a front substrate (14) with a barrier coating (16) and a back substrate (18) with a barrier coating (20), said barrier coatings (16, 20) forming part of the barrier encapsulation (60), the system (10) further including an isolation element (24) and vertical interconnects (22), wherein a first part of the contactless power transfer system (25) is disposed internal to the encapsulation (60) and a second part of the contactless power transfer system (26) is disposed external to the encapsulation (60), wherein the first part (25) is not in wired contact with the second part (26) and wherein the first part and second part (25, 26) are configured to transfer energy across the barrier encapsulation (60) to the optoelectronic device (12) through the vertical interconnects (22).

2. The system (10) of claim 1, wherein the contactless power transfer system is an inductive power transfer system.

3. The system (10) of claim 2, wherein the barrier encapsulation (60) is substantially transparent to magnetic field.

4. The system (10) of claim 2, wherein the inductive power transfer system comprises at least one transformer comprising at least one first inductor coil (56) disposed external to the barrier encapsulation and at least one second inductor coil (58) disposed internal to the encapsulation, wherein the at least one first and the at least one second inductor coils are configured to transfer energy across the barrier encapsulation (60).

5. The system (10) of claim 2, wherein the inductive power transfer system further comprising at least one magnetic layer (76) adjacent to the at least one first or second inductor coil (56,58).

6. The system (10) of claim 5, wherein the at least one first or second inductor coil (56,58) is positioned between the at least one magnetic layer (76) and the barrier encapsulation (60).

7. The system (10) of claim 5, wherein the at least one magnetic layer (76) is a divided layer.

8. The system (10) of claim 1, further comprising an inverter (52) to convert a DC power to AC power input to the contactless power transfer system.

9. The system (10) of claim 1, further comprising a high frequency generator to provide high frequency power input to the contactless power transfer system.

10. The system (10) of claim 1, further comprising a rectifier (124) to convert AC power output from the contactless power transfer system to DC power.

11. The system (10) of claim 10, further comprising at least one filter capacitor (94,96) configured to reduce AC component of the rectifier (124).

12. The system (10) of claim 1, wherein the optoelectronic semiconductor device (12) is a lighting device and power is coupled into the lighting device across the encapsulation (60) to power the lighting device.

## Patentansprüche

1. System (10), das Folgendes umfasst:
ein verkapseltes optoelektronisches Halbleiterbauelement (12), das innerhalb einer Sperrverkapselung (60) angeordnet ist; und
ein kontaktloses Stromübertragungssystem (32), das dafür konfiguriert ist, Strom und/oder Daten über die Sperrverkapselung (60) hinweg zu übertragen;
wobei das System (10) ein vorderes Substrat (14) mit einer Sperrbeschichtung (16) und ein hinteres Substrat (18) mit einer Sperrbeschichtung (20) enthält, wobei die Sperrbeschichtungen (16, 20) einen Teil der Sperrverkapselung (60) bilden, wobei das System (10) des Weiteren ein Isolierelement (24) und vertikale Zwischenverbindungen (22) enthält, wobei ein erster Teil des kontaktlosen Stromübertragungssystems (25) innerhalb der Verkapselung (60) angeordnet ist und ein zweiter Teil des kontaktlosen Stromübertragungssystems (26) außerhalb der Verkapselung (60) angeordnet ist, wobei der erste Teil (25) nicht in verdrahtetem Kontakt mit dem zweiten Teil (26) steht und wobei der erste Teil und der zweite Teil (25, 26) dafür konfiguriert sind, Energie über die Sperrverkapselung (60) hinweg durch die vertikalen Zwischenverbindungen (22) zu dem optoelektronischen Bauelement (12) zu übertragen.

2. System (10) nach Anspruch 1, wobei das kontaktlose Stromübertragungssystem ein induktives Stromübertragungssystem ist.

3. System (10) nach Anspruch 2, wobei die Sperrverkapselung (60) für ein Magnetfeld im Wesentlichen durchlässig ist.

4. System (10) nach Anspruch 2, wobei das induktive Stromübertragungssystem mindestens einen Transformator umfasst, der mindestens eine erste Induktionsspule (56), die außerhalb der Sperrverkapselung angeordnet ist, und mindestens eine zweite Induktionsspule (58), die innerhalb der Verkapselung angeordnet ist, umfasst, wobei die mindestens eine erste und die mindestens eine zweite Induktionsspule dafür konfiguriert sind, Energie über die Sperrverkapselung (60) hinweg zu übertragen.

5. System (10) nach Anspruch 2, wobei das induktive Stromübertragungssystem des Weiteren mindestens eine Magnetschicht (76) neben der mindestens einen ersten oder zweiten Induktionsspule (56, 58) umfasst.

6. System (10) nach Anspruch 5, wobei die mindestens eine erste oder zweite Induktionsspule (56, 58) zwischen der mindestens einen Magnetschicht (76) und der Sperrverkapselung (60) angeordnet ist.

7. System (10) nach Anspruch 5, wobei die mindestens eine Magnetschicht (76) eine geteilte Schicht ist.

8. System (10) nach Anspruch 1, das des Weiteren einen Wechselrichter (52) umfasst, um einen Gleichstrom in einen Wechselstrom umzuwandeln, der in das kontaktlose Stromübertragungssystem eingespeist wird.

9. System (10) nach Anspruch 1, das des Weiteren einen Hochfrequenzgenerator umfasst, um einen Hochfrequenzstrom zu erzeugen, der in das kontaktlose Stromübertragungssystem eingespeist wird.

10. System (10) nach Anspruch 1, das des Weiteren einen Gleichrichter (124) umfasst, um einen Wechselstrom, der von dem kontaktlosen Stromübertragungssystem ausgegeben wird, in einen Gleichstrom umzuwandeln.

11. System (10) nach Anspruch 10, das des Weiteren mindestens einen Filterkondensator (94, 96) umfasst, der dafür konfiguriert ist, eine Wechselstromkomponente des Gleichrichters (124) zu reduzieren.

12. System (10) nach Anspruch 1, wobei das optoelektronische Halbleiterbauelement (12) ein Leuchtelement ist und Strom über die Verkapselung (60) hinweg in das Leuchtelement eingekoppelt wird, um das Leuchtelement zu betreiben.

## Revendications

1. Système (10) comprenant :
un dispositif semi-conducteur optoélectronique encapsulé (12) disposé à l'intérieur d'une encapsulation barrière (60) ; et
un système de transfert de puissance sans contact (32) configuré pour transférer au moins une parmi une puissance et des données à travers l'encapsulation barrière (60) ;
dans lequel le système (10) comprend un substrat avant (14) avec un revêtement barrière (16) et un substrat arrière (18) avec un revêtement barrière (20), lesdits revêtements barrières (16, 20) formant une partie de l'encapsulation barrière (60), le système (10) comprenant en outre un élément d'isolation (24) et des interconnexions verticales (22), dans lequel une première partie du système de transfert de puissance sans contact (25) est disposée à l'intérieur de l'encapsulation (60) et une deuxième partie du système de transfert de puissance sans contact (26) est disposée à l'extérieur de l'encapsulation (60), dans lequel la première partie (25) n'est pas en contact câblé avec la deuxième partie (26) et dans lequel les première et deuxième parties (25, 26) sont configurées pour transférer de l'énergie à travers l'encapsulation barrière (60) au dispositif optoélectronique (12) à travers les interconnexions verticales (22).

2. Système (10) selon la revendication 1, dans lequel le système de transfert de puissance sans contact est un système de transfert de puissance inductif.

3. Système (10) selon la revendication 2, dans lequel l'encapsulation barrière (60) est sensiblement transparente à un champ magnétique.

4. Système (10) selon la revendication 2, dans lequel le système de transfert de puissance inductif comprend au moins un transformateur comprenant au moins une première bobine d'induction (56) disposée à l'extérieur de l'encapsulation barrière et au moins une deuxième bobine d'induction (58) disposée à l'intérieur de l'encapsulation, dans lequel l'au moins une première et l'au moins une deuxième bobine d'induction sont configurées pour transférer de l'énergie à travers l'encapsulation barrière (60).

5. Système (10) selon la revendication 2, dans lequel le système de transfert de puissance inductif comprend en outre au moins une couche magnétique (76) adjacente à l'au moins une première ou deuxième bobine d'induction (56, 58).

6. Système (10) selon la revendication 5, dans lequel l' au moins une première ou deuxième bobine d'induction (56, 58) est positionnée entre l'au moins une couche magnétique (76) et l'encapsulation barrière (60).

7. Système (10) selon la revendication 5, dans lequel l'au moins une couche magnétique (76) est une couche divisée.

8. Système (10) selon la revendication 1, comprenant en outre un onduleur (52) pour convertir une puissance CC en puissance CA délivrée en entrée au système de transfert de puissance sans contact.

9. Système (10) selon la revendication 1, comprenant en outre un générateur à haute fréquence pour fournir une puissance à haute fréquence délivrée en entrée au système de transfert de puissance sans contact.

10. Système (10) selon la revendication 1, comprenant en outre un redresseur (124) pour convertir la puissance CA délivrée en sortie par le système de transfert de puissance sans contact en puissance CC.

11. Système (10) selon la revendication 10, comprenant en outre au moins un condensateur de filtrage (94, 96) configuré pour réduire la composante CA du redresseur (124).

12. Système (10) selon la revendication 1, dans lequel le dispositif semi-conducteur optoélectronique (12) est un dispositif d'éclairage et l'énergie est couplée dans le dispositif d'éclairage à travers l'encapsulation (60) pour alimenter le dispositif d'éclairage.
